# EUROPEAN PATENT SPECIFICATION

(11) **EP 4 279 779 B1**
(45) Date of publication and mention of the grant of the patent: **04.11.2026**
(21) Application number: 21940045.4
(22) Date of filing: 16.05.2021
(51) Int. Cl.: F16K 17/02, F16K 17/04

(54) **HYDRAULIC CONTROL VALVE, HYDRAULIC CONTROL SYSTEM AND TRANSMISSION**
HYDRAULISCHES STEUERVENTIL, HYDRAULISCHES STEUERSYSTEM UND GETRIEBE
SOUPAPE DE COMMANDE HYDRAULIQUE, SYSTÈME DE COMMANDE HYDRAULIQUE ET TRANSMISSION

(43) Date of publication of application: 22.11.2023
(73) Proprietor: Wuxi InfiMotion Technology Co., Ltd., Wuxi, Jiangsu 214100 (CN)
(72) Inventor: QIU, Zhiling, Hangzhou, Zhejiang 310051 (CN); ZHAO, Wenjiang, Hangzhou, Zhejiang 310051 (CN); FU, Lingling, Hangzhou, Zhejiang 310051 (CN); TAN, Yanjun, Hangzhou, Zhejiang 310051 (CN); LIN, Xiaozhe, Hangzhou, Zhejiang 310051 (CN); WANG, Ruiping, Hangzhou, Zhejiang 310051 (CN); SCHOLTEN, Ingo, Hangzhou, Zhejiang 310051 (CN)
(74) Representative: Range, Christopher William
(86) International application number: PCT/CN2021/093988
(87) International publication number: WO 2022/241586

(56) References cited:
- EP-B1- 2 797 766
- CN-A- 102 536 964
- CN-A- 104 500 463
- CN-A- 105 042 066
- CN-A- 105 201 950
- CN-A- 108 691 838
- DE-A1- 102012 007 108
- DE-A1- 102014 226 623
- JP-A- 2000 081 913
- US-A- 3 918 470
- US-A- 4 955 283

## Description

### FIELD

The present disclosure relates to the field of vehicle technologies, and more particularly, to a hydraulic control valve, a hydraulic control system, and a transmission.

### BACKGROUND

In the related art, an automatic transmission of a vehicle uses a friction plate type brake or a clutch to shift gear. Generally, these brakes or clutches are engaged or disengaged for torque control by means of a hydraulic oil pump, an oil cylinder, and a proportional pressure solenoid valve. Although these components are highly reliable, some parts would malfunction in a severe use environment. Some faults may cause a vehicle safety accident and thus must be avoided. For example, for a dual-clutch transmission, when two clutches are simultaneously engaged, the transmission can be self-locked, which causes the vehicle to be out of control in direction and even turn over. For example, US patent No. 4955283 discloses a hydraulic circuit suitable for use on power shovel or other construction machines, of the type which is adapted to control pressurized oil flows to and form two oil chambers in the cylinder by switching the position of a directional control valve in communication with a pressurized oil source. DE application No. 102012007108 discloses a proportional flow control valve has a main stage, whose valve body is acted upon the pressure in a control chamber in a closing direction. A pilot branch is provided, in which a pilot valve and an associated pressure regulator are arranged, where the pressure regulator is arranged downstream of the pilot valve. The pilot valve is a continuously adjustable throttle, where the pilot valve is electrically, electromagnetically proportional, hydraulically, or manually adjustable. US application US3918470A discloses a valve having a deformable bladder which is precharged with gas under pressure to a valve such as to retain a valve member in closed position until the fluid pressure in the circuit exceeds a predetermined amount. DE Patent Application No. 102014226623A1 discloses a direct-acting pressure relief valve for a hydraulic machine, which has a stationary housing with an axial valve bore, a radial pressure opening and a radial tank opening. A valve piston that can be actuated by an actuating device is guided in the valve bore so that it can be moved axially, and the radial pressure opening, and the radial tank opening can be fluidically connected to one another and/or separated from one another in a continuous manner depending on the longitudinal position of the valve piston. EP Publication No. 2797766B1 discloses a driving system including a driving motor, a transmission and a hydraulic system. The transmission may include an input shaft, an output shaft, a first transmission unit, a first clutch, a second transmission unit and a second clutch.

In order to avoid such safety accidents, a pressure sensor and a series solenoid valve are generally added to a control oil circuit of the clutch. Upon it is detected that two oil circuits are at a higher pressure simultaneously, a controller of the transmission can relieve the pressures of one or both of two oil circuits by means of the solenoid valve, thereby avoiding simultaneous engagement of the two clutches. By loading the pressure sensor and the series solenoid valve, it is possible to avoid the safety accidents due to the self-locking of the transmission. However, such pressure sensor and series solenoid valve have high cost and large occupied space. As a result, the transmission has a higher total cost. Currently, these anti-self-locking technologies haven't been applied to most of domestic transmissions yet, which restricts a security level of the transmission.

Therefore, it is necessary to made modification to the related art to replace these pressure sensors and series solenoid valves, thereby reducing the cost of the transmission.

### SUMMARY

The present invention is set out in the appended set of claims.

### BRIEF DESCRIPTION OF THE DRAWINGS

In order to clearly explain technical solutions of embodiments of the present disclosure, drawings used in the embodiments are briefly described below. It should be understood that the drawings as described below merely illustrate some embodiments of the present disclosure, and should not be construed as limiting the scope. Based on these drawings, other drawings can be obtained by those skilled in the art without creative effort.
FIG. 1 (a) is a structural view of a parallel-type anti-self-locking hydraulic control valve in a first operation state according to an embodiment of the present disclosure.
FIG. 1 (b) is a structural view of a parallel-type anti-self-locking hydraulic control valve in a second operation state according to an embodiment of the present disclosure.
FIG. 2 is a pressure change graph of a transmission engaged with and disengaged from a clutch oil cylinder during normal gear shift of the transmission according to embodiments of the present disclosure.
FIG. 3 is a pressure change graph of a two-clutch oil cylinder during a gear shift fault according to embodiments of the present disclosure.
FIG. 4 (a) is schematic view of a series-type self-locking hydraulic control valve according to another embodiment (not claimed).
FIG. 4 (b) is a structural view of the hydraulic control valve in FIG. 4 (a) during normal operation of the hydraulic control valve.
FIG. 4 (c) is a structural view of the hydraulic control valve in FIG. 4 (a) during a fault of a control system.
FIG. 5 is a schematic view of an anti-self-locking hydraulic control system according to an embodiment of the present disclosure.
FIG. 6 is a schematic view of a dual-speed transmission according to an embodiment of the present disclosure.
FIG. 7 is a schematic view of a dual-clutch multi-speed transmission according to another embodiment of the present disclosure.

1-hydraulic control valve, 11-valve body, 111-valve hole, 112-first oil supply port, 113-second oil supply port, 114-oil discharge port, 115-valve port, 116-third oil supply port, 12-slidable valve cartridge, 121-sealing portion, 122-first pressure sensing end, 123-second pressure sensing end, 124-damping orifice, 131-spring, 132-spring seat, 133-spring sleeve;
2-first oil cylinder;
3-second oil cylinder;
4-first proportional valve, 41-outlet of first proportional valve;
5-second proportional valve;
6-prime mover;
71-first planetary gear mechanism, 711-first sun gear, 712-first planetary carrier, 713-first output gear, 72-second planetary gear mechanism, 721-second sun gear, 722-second planetary carrier;
8-output shaft, 81-gear, 82-gear;
9-differential gear, 91-gear, 92-tire;
B₁-brake; B₂-another brake.

### DETAILED DESCRIPTION

In order to make the above objects, the technical solutions and advantages of the present disclosure clearer, reference will be made clearly and completely technical solutions in the embodiments of the present disclosure with accompanying drawings. Obviously, the embodiments described here are only part of the embodiments of the present disclosure and are not all embodiments of the present disclosure. Based on the embodiments of the present disclosure, other embodiments obtained by those skilled in the art without creative labor are within scope of the present disclosure. The embodiments of the present disclosure will be described in detail below with reference to examples thereof as illustrated in the accompanying drawings, throughout which same or similar elements, or elements having same or similar functions, are denoted by same or similar reference numerals.

Embodiments of the present disclosure provides an anti-self-locking hydraulic control valve, which can simultaneously sense hydraulic pressures of two hydraulic control oil circuits in communication with brakes or clutches. When a resultant force exerted on the hydraulic control valve from the hydraulic pressures of the two oil circuits is smaller than a threshold, pressure oil can smoothly flow through the two oil circuits to allow for a normal engagement operation of the brakes or the clutches. Once the resultant force exerted on the hydraulic control valve from the hydraulic pressures of the two oil circuits is greater than the threshold, the hydraulic control valve allows the pressure oil of one of the brakes or clutches to bypass through the oil discharge port 114, thereby avoiding further increase of the pressure of the brake. Therefore, it is possible to prevent the two brakes from being locked due to the simultaneous engagement during a control failure.

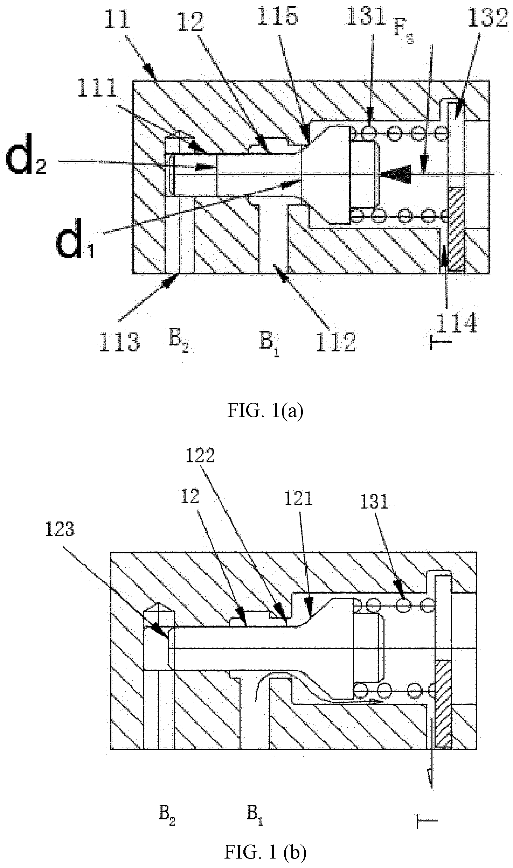

FIG. 1 (a) is a structural view of a parallel-type anti-self-locking hydraulic control valve in a first operation state according to an embodiment of the present disclosure, in which a position of a slidable valve cartridge 12 during a normal operation of a transmission is shown. FIG. 1 (b) is a structural view of a parallel-type anti-self-locking hydraulic control valve in a second operation state according to an embodiment of the present disclosure, in which a position of the slidable valve cartridge 12 of the anti-self-locking hydraulic control valve during control system failure . Referring to FIG. 1 (a) and FIG. 1 (b), embodiments of the present disclosure provide a hydraulic control valve 1. The hydraulic control valve 1 includes a valve body 11, a slidable valve cartridge 12, and a pressing mechanism.

A valve hole 111, a first oil supply port 112, a second oil supply port 113, and an oil discharge port 114 are formed at the valve body 11. Each of the first oil supply port 112, the second oil supply port 113, and the oil discharge port 114 is in communication with the valve hole 111. The first oil supply port 112 is connected to an oil supply circuit of a brake B₁. The second oil supply port 113 is connected to an oil supply circuit of another brake B₂. The oil discharge port 114 directly leads to an oil sump.

The hydraulic control valve has a first operation state and a second operation state. In the first operation state, a total oil supply pressure on the slidable valve cartridge from the first oil supply port and the second oil supply port is small than or equal to a pressing force from the pressing mechanism, and the first oil supply port, the second oil supply port, and the oil discharge port are in no communication with each other. In the second operation state, the total oil supply pressure on the slidable valve cartridge from the first oil supply port and the second oil supply port is greater than the pressing force from the pressing mechanism, and the slidable valve cartridge moves towards the pressing mechanism to bring the first oil supply port into communication with the oil discharge port via the valve hole.

It should be noted that, in addition to the first oil supply port 112, the second oil supply port 113, and the oil discharge port 114 as described above, the valve body 11 may further include other oil supply ports and/or oil discharge ports 114.

It should be noted that the first operation state refers to a state in which an oil supply device in communication with the first oil supply port 112 and an oil supply device in communication with the second oil supply port 113 are both in normal operation (no failure) states when supplying oil to their respective oil supply ports. The oil supply device may be a brake and/or a clutch. For example, as illustrated in FIG. 1 (a) and FIG. 1 (b), when the brake B₁ in communication with the first oil supply port 112 and the brake B₂ in communication with the second oil supply port 113 are both in states in which both the in the related art brake B₁ and the brake B₂ normally supply oil to their respective oil supply ports, the hydraulic control valve is in a normal operation state (no failure).

The second operation state refers to a state in which when the oil supply device in communication with the first oil supply port 112 and the oil supply device in communication with the second oil supply port 113 supply oil to their respective oil supply ports, one of oil supply circuits in communication with the brake B₁ or the brake B₂ has an excessive pressure due to the failure and the total hydraulic force on the slidable valve cartridge 12 is greater than the pressing force. In this state, the slidable valve cartridge 12 can bring the first oil supply port 112 into communication with the second oil supply port 113 by a hydraulic force to relieve the oil supply pressure of the oil discharge port 114, thereby preventing the transmission from being locked. For example, when the brake B₁ illustrated in FIG. 1 (a) and FIG. 1 (b) in communication with the first oil supply port 112 and the brake B₁ cannot perform normal pressure relief due to failure, and the brake B₂ illustrated in FIG. 1 (a) and FIG. 1 (b) in communication with the second oil supply port 113 normally supplies oil to its corresponding oil supply port, the hydraulic control valve is in the second operation state.

The slidable valve cartridge 12 and the pressing mechanism are both accommodated in the valve hole 111. A small end of the slidable valve cartridge 12 is located close to one end of the valve hole 111, and a large end of the slidable valve cartridge 12 abuts against the pressing mechanism. The pressing mechanism is disposed at the other end of the valve hole 111.

When the total oil supply pressure on the slidable valve cartridge 12 from the first oil supply port 112 and the second oil supply port 113 is greater than the pressing force from the pressing mechanism, the slidable valve cartridge 12 can move towards the pressing mechanism to bring the first oil supply port 112 into communication with the oil discharge port 114 via the valve hole 111. The pressing force is a total maximum hydraulic pressure simultaneously exerted on the slidable valve cartridge 12 by the first oil supply port 112 and the second oil supply port 113 during the normal operation.

When one of oil supply circuits in communication with the brake B₁ or the brake B₂ is at excessive pressure due to the failure, and the total hydraulic force on the slidable valve cartridge 12 is greater than the pressing force, the slidable valve cartridge 12 can bring the first oil supply port 112 into communication with the oil discharge port 114 with the hydraulic force, to relieve the oil supply pressure of the first oil supply port 112, thereby preventing the transmission from being locked.

In some embodiments, the valve hole 111 is a stepped valve hole 111. A valve port 115 is formed at the valve hole 111 between the first oil supply port 112 and the oil discharge port 114.

The slidable valve cartridge 12 is a stepped slidable valve cartridge 12. The slidable valve cartridge 12 further includes a sealing portion 121. The sealing portion 121 is configured to close or open the valve port 115 through a movement of the slidable valve cartridge 12 to change a communication state between the first oil supply port 112 and the oil discharge port 114. A shape of the sealing portion 121 matches with a shape of the valve port 115. For example, as illustrated in FIG. 1(a) and FIG. 1(b), the sealing portion 121 may be of a frustum shape having a small end close to the small end of the slidable valve cartridge 12 and a large end close to the large end of the slidable valve cartridge 12.

In the normal operation state, a diameter d₁ of the valve hole 111 at a position corresponding to the small end of the slidable valve cartridge 12 is greater than a diameter d₂ of the valve hole 111 at a position corresponding to the large end of the slidable valve cartridge 12.

The slidable valve cartridge 12 further includes a first pressure sensing end 122 and a second pressure sensing end 123. The first pressure sensing end 122 is configured to sense an oil supply pressure from the first oil supply port 112. In an example, the first pressure sensing end 122 is an annular surface between the small end (a circular area with a diameter *d₂*) of the slidable valve cartridge 12 and the large end (a circular area with a diameter *d₁*) of the slidable valve cartridge 12. An annular area between the small end and the large end of the slidable valve cartridge 12 satisfies: ${A}_{1} \left(=π\left({d}_{1}^{2}-{d}_{2}^{2}\right)/4\right) .$

The second pressure sensing end 123 is configured to sense an oil supply pressure from the second oil supply port 113. In an example, the second pressure sensing end 123 is a small end surface (a circular area with a diameter *d₂*) of the slidable valve cartridge 12. The small end area of the slidable valve cartridge 12 satisfies: ${A}_{2} \left(={πd}_{2}^{2}/4\right) .$

According to the above embodiments, the pressing force of the pressing mechanism is set as the total maximum hydraulic pressure on the slidable valve cartridge 12 during the simultaneous oil supplying to the two brakes. Assuming that a maximum operation pressure of the brake B₁ is *B₁ₘₐₓ*, and a maximum operation pressure of the brake B₂ is *B₂ₘₐₓ*, the pressing force satisfies: ${F}_{S} = {A}_{2} {B}_{2 max} + {c}_{1} {A}_{1} {B}_{1 max ,}$ where *c₁* is a self-locking pressure coefficient of the brake, and the brake is locked or burnt out when the pressure of the brake B₁ is greater than *c₁B₁ₘₐₓ.* Generally, c₁ is about 0.5. For example, c₁ may range within any one of [0.3, 0.7], [0.35, 0.65], [0.4, 0.6], and [0.48, 0.52]. It should be noted that the value range of *c₁* may also be set as desired, and the present disclosure is not limited thereto.

When a vehicle normally travels, only one of the brake B₁ and the brake B₂ is supplied with oil to operate, the hydraulic force exerted on the slidable valve cartridge 12 is thus smaller than the pressing force Fₛ, and the slidable valve cartridge 12 is pressed at the valve port 115 by the pressing mechanism. In this case, the valve port 115 is blocked by the sealing portion 121 of the slidable valve cartridge 12, and the first oil supply port 112, the second oil supply port 113 and the oil discharge port 114 are in no communication with each other. As a result, the anti-locking valve has no effect on the oil supply to the two brakes.

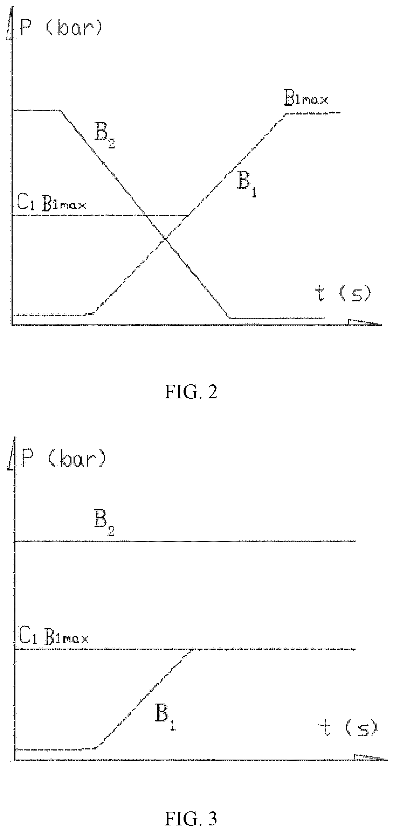

FIG. 2 is a pressure change graph of a transmission engaged with and disengaged from a clutch oil cylinder during normal gear shift of the transmission according to embodiments of the present disclosure. During the gear shift of the vehicle, the pressures of the two brakes are interchanged, as illustrated in FIG. 2. In order to avoid power interruption, the pressure of the brake B₁ during its engagement starts to increase slowly before the pressure of the brake B₂ during its disengagement completely removed.

However, when the pressure of the brake B₁ reaches *c₁B₁ₘₐₓ,* the pressure of the brake B₂ decreases below *c₁B₁ₘₐₓ,* the hydraulic pressure on the slidable valve cartridge 12 from the oil supply pressures of the two brake is still far smaller than the pressing force Fₛ, and the slidable valve cartridge 12 is still pressed at the valve port 115 by the pressing mechanism. In this case, the first oil supply port 112, the second oil supply port 113, and the oil discharge port 114 are in no communication with each other. As a result, the hydraulic control valve has no effect on the normal oil supply to the two brakes.

FIG. 3 is a pressure change graph of a two-clutch oil cylinder during a gear shift failure according to embodiments of the present disclosure. Referring to FIG. 3, in a case where one of the two oil circuits (for example, the oil supply circuit in communication with the brake B₂) cannot relieve the pressure due to failure, when the pressure of the other one of the two circuits (for example, the oil supply circuit in communication with the brake B₁) increases to be greater than the predetermined value *c₁B₁ₘₐₓ* during the gear shift, the hydraulic force on the slidable valve cartridge 12 is greater than the pressing force Fₛ. In this case, the slidable valve cartridge 12 moves away from the valve port 115 with hydraulic force to bring the first oil supply port 112 into communication with the oil discharge port 114. Therefore, the oil supply pressure of the brake B₁ is relieved to prevent the transmission from being locked.

In some embodiments, the pressing mechanism includes a spring 131 and a spring seat 132. An end of the spring 131 abuts against the large end of the slidable valve cartridge 12. The other end of the spring 131 is connected to the spring seat 132. The spring seat 132 is disposed at the other end of the valve hole 111.

In some embodiments, the pressing mechanism further includes a spring sleeve 133. The spring sleeve 133 is coaxially arranged with the slidable valve cartridge 12 and sleeved over the slidable valve cartridge 12. The end of the spring 131 is connected to the spring sleeve 133. The spring 131 is at least partially wrapped by the spring sleeve 133.

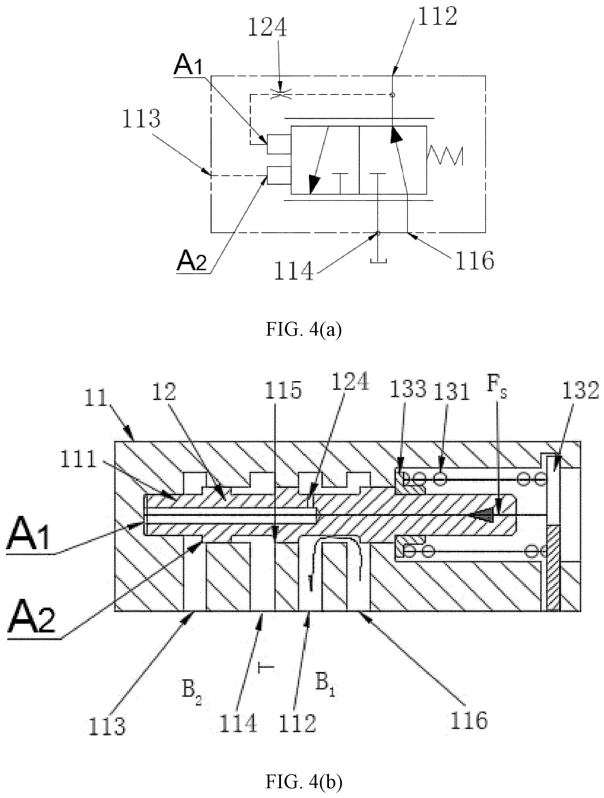

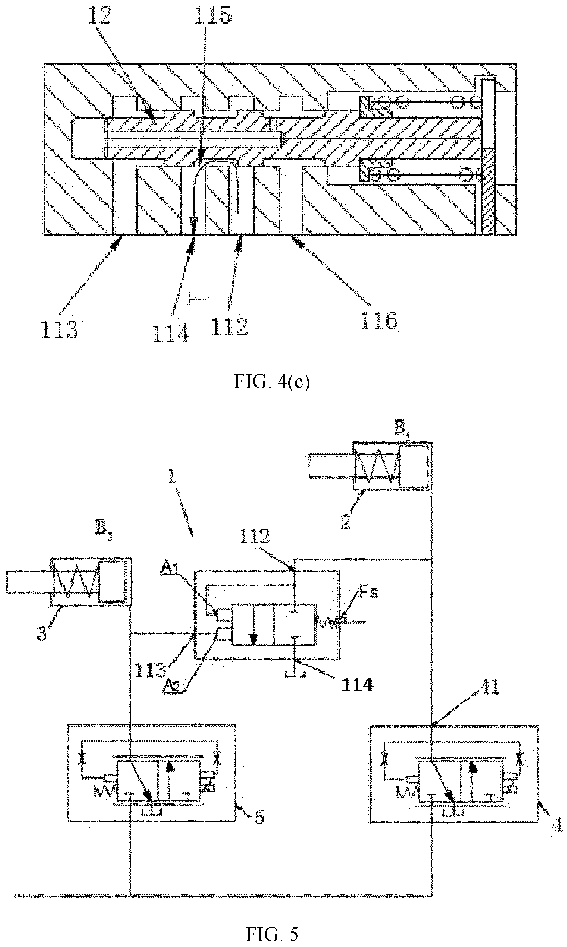

FIG. 4 (a) is schematic view of a series-type self-locking hydraulic control valve according to another embodiment (not claimed). FIG. 4 (b) is a structural view of the hydraulic control valve in FIG. 4 (a) during the normal operation of the hydraulic control valve, in which a position of the slidable valve cartridge 12 during the normal operation of the transmission is shown. FIG. 4 (c) is a structural view of the hydraulic control valve in FIG. 4 (a) during control system failure, in which a position of the slidable valve cartridge 12 during the control system failure is shown. When the brake B₁ is at a lower operation pressure and a space is enough, the anti-locking valve may also be designed into the series form as illustrated in FIG. 4 (a), FIG. 4 (b), and FIG. 4 (c). In one embodiment, the hydraulic control valve includes a valve body 11, a slidable valve cartridge 12, and a pressing mechanism.

A valve hole 111, a first oil supply port 112, a second oil supply port 113, a third oil supply port 116, and an oil discharge port 114 are formed at the valve body 11, and each of the first oil supply port 112, the second oil supply port 113, the third oil supply port 116, and the oil discharge port 114 are in communication with the valve hole 111. The slidable valve cartridge 12 and the pressing mechanism are both accommodated in the valve hole 111. The slidable valve cartridge 12 has a small end close to an end of the valve hole 111 and a large end abutting against the pressing mechanism. The pressing mechanism is disposed at the other end of the valve hole 111.

When a total oil supply pressure on the slidable valve cartridge 12 from the first oil supply port 112 and the second oil supply port 113 is greater than a pressing force from the pressing mechanism, the slidable valve cartridge 12 moves towards the pressing mechanism to bring the first oil supply port 112 into communication with the oil discharge port 114 via the valve hole 111. In this case, the third oil supply port 116 is blocked by the slidable valve cartridge 12.

When the pressing force from the pressing mechanism is set as a total maximum hydraulic force exerted on the slidable valve cartridge 12 by both the first oil supply port 112 and the second oil supply port 113 during a normal operation (i.e., the hydraulic control valve is in a first operation state). During the normal operation, a hydraulic force on the slidable valve cartridge 12 from a total oil supply pressure of the two clutches is smaller than a force Fₛ of the spring 131, and the slidable valve cartridge 12 is pressed at a left position illustrated in FIG. 4 (b). In this case, the valve port 115 is closed. In addition, the first oil supply port 112, the second oil supply port 113, and the oil discharge port 114 are in no communication with each other, and the first oil supply port 112 is in communication with the third oil supply port 116 to deliver oil from the third oil supply port 116 to the first oil supply port 112.

When the two oil circuits each are at high pressure due to the failure, the hydraulic force on the slidable valve cartridge 12 is greater than the force Fₛ of the spring 131, and the slidable valve cartridge 12 moves rightwards into a position illustrated in FIG. 4 (c) with the hydraulic force. In this case, the valve port 115 is opened, and the first oil supply port 112 is in communication with the oil discharge port 114. Therefore, the pressure oil from the first oil supply port 112 is discharged through the oil discharge port 114 to prevent the transmission from being locked. Meanwhile, the third oil supply port 116 is also blocked by the slidable valve cartridge 12 to prevent pressure oil of the entire hydraulic system from being leaked. Thus, it is possible to ensure that the vehicle can limp home without gear shift by means of the other brake B₂ that is not pressure-relieved. Although the series-type anti-self-locking hydraulic control valve according to the embodiments of the present disclosure is complex and prone to leakage, oil supply can be cut off when failure occurs, thereby ensuring that the vehicle can travel home smoothly.

In some embodiments, the valve port 115 is formed at the valve hole 111 between the first oil supply port 112 and the oil discharge port 114. The sealing portion 121 of the slidable valve cartridge 12 is configured to close or open the valve port 115 through the movement of the slidable valve cartridge 12 to change a communication state between the first oil supply port 112 and the oil discharge port 114. A shape of the sealing portion 121 matches with a shape of the valve port 115.

In some embodiments, the slidable valve cartridge 12 includes a first pressure sensing end 122 and a second pressure sensing end 123. The description of the first pressure sensing end 122 and the second pressure sensing end 123 may refer to the above embodiments, and details thereof will be omitted herein.

In some embodiments, a damping orifice 124 is further formed at the slidable valve cartridge 12. The damping orifice 124 is configured to guide an oil supply pressure from the first oil supply port 112 to the first pressure sensing end 122. The damping orifice 124 is in communication with the valve hole 111.

In some embodiments, the pressing mechanism includes a spring 131 and a spring seat 132. An end of the spring 131 abuts against the large end of the slidable valve cartridge 12, and the other end of the valve hole 111 is connected to the spring seat 132. The spring seat 132 is disposed at the other end of the valve hole 111. In addition, in order to facilitate the design of the spring 131, the pressing mechanism further includes a spring sleeve 133. The spring sleeve 133 is coaxially arranged with the slidable valve cartridge 12 and sleeved on the slidable valve cartridge 12. The end of the spring 131 is connected to the spring sleeve 133. The spring 131 is at least partially wrapped by the spring sleeve133.

FIG. 5 is a schematic diagram of an anti-self-locking hydraulic control system according to an embodiment of the present disclosure. With reference to FIG. 5, in the hydraulic control system according to the present disclosure, a self-locking hydraulic control valve 1 is connected in parallel or in series to a hydraulic oil supply circuit of a brake or clutch that may be self-locked due to misoperation. The hydraulic control system includes a first oil cylinder 2, a second oil cylinder 3, a first proportional valve 4, a second proportional valve 5, and the hydraulic control valve 1 according to the above embodiments of the present disclosure.

An outlet 41 of the first proportional valve is in communication with the first oil cylinder 2 and the first oil supply port 112. An outlet of the second proportional valve 5 is in communication with the second oil cylinder 3 and the second oil supply port 113.

It should be noted that, in the first operation state, the oil supply device in communication with the first oil supply port 112 and the oil supply device in communication with the second oil supply port 113 are both in the normal operation (no failure) states when supplying oil to their respective oil supply ports. The oil supply device may be a brake and/or a clutch.

The first oil cylinder 2 and the second oil cylinder 3 are control oil cylinders of the two brakes of the transmission, and are supplied with oil by a first electromagnetic proportional valve and a second electromagnetic proportional valve, respectively. When the first electromagnetic proportional valve and the second electromagnetic proportional valve supply high-pressure oil to the two oil cylinders simultaneously due to the failure, the two brakes are engaged simultaneously. As a result, the transmission and wheels of the vehicle are locked, which results in accidents. According to this embodiment, the brake control system as illustrated in FIG. 1 is additionally provided with the anti-self-locking hydraulic control valve 1. The hydraulic control valve 1 can sense oil supply pressures of the first oil cylinder 2 and of the second oil cylinder 3 simultaneously without influence on the oil supplying to the brake B₁ and the brake B₂. When the total hydraulic pressure on the slidable valve cartridge 12 from the first oil cylinder 2 and the second oil cylinder 3 is higher than a predetermined pressure (i.e., the pressing force of the pressing mechanism) of the spring 131 of the hydraulic control valve 1, the valve port 115 of the hydraulic control valve 1 is opened to discharge the pressure oil of the first oil cylinder 2 through the oil discharge port 114, thereby avoiding the simultaneous operations of the two brakes and the locking of the transmission.

When the brake B₁ is at a low operation pressure and the space is enough, the series-type self-locking hydraulic control valve 1 illustrated in FIG. 4 (a), FIG. 4 (b), and FIG. 4 (c) is further connected in series to the hydraulic oil supply circuit of the brake or the clutch that is self-locked due to the misoperation. The series-type self-locking hydraulic control valve 1 further includes a third oil supply port 116 in communication with the outlet 41 of the first proportional valve.

During the normal operation, the first oil supply port 112, the second oil supply port 113, and the oil discharge port 114 are in no communication with each other, and the first oil supply port 112 is in communication with the third oil supply port 116 to deliver the oil from the third oil supply port 116 to the first oil supply port 112.

When the two oil circuits each are at high pressure due to the failure, the hydraulic pressure exerted on the slidable valve cartridge 12 is greater than the force Fₛ of the spring 131. In this case, the valve port 115 is opened, and the first oil supply port 112 is in communication with the oil discharge port 114 to discharge the pressure oil from the first oil supply port 112 through the oil discharge port 114. Thus, it is possible to prevent the transmission from being locked. Meanwhile, the third oil supply port 116 is also blocked by the slidable valve cartridge 12 to prevent the pressure oil of the entire hydraulic system from being leaked. Thus, it is possible to ensure that the vehicle can limp home without gear shift by means of the other brake B₂ that is not pressure-relieved.

Embodiments of the present disclosure provide a transmission. The transmission includes the hydraulic control system as described in the above embodiments. The transmission may be a transmission having a plurality of brakes or clutches.

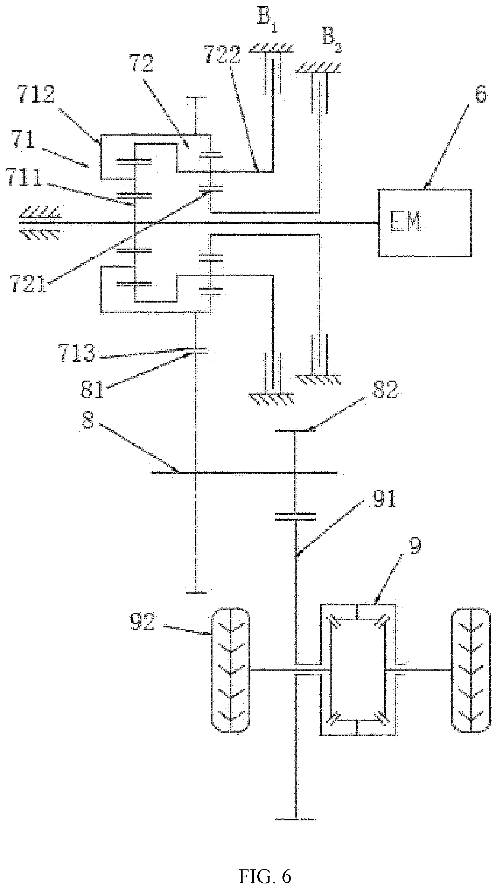

FIG. 6 is a schematic view of a dual-speed transmission according to an embodiment of the present disclosure. With reference to FIG. 6, the transmission mainly includes a brake B₁, a brake B₂, a first planetary gear mechanism 71, a second planetary gear mechanism 72, an output shaft 8, and a differential gear 9. A prime mover 6 is directly connected to a first sun gear 711 of the first planetary gear mechanism 71, and a first planetary carrier 712 of the first planetary gear mechanism 71 is connected to a first output gear 713. When the brake B₁ is engaged, tires 92 are driven by the prime mover 6 through the first sun gear 711, the first planetary carrier 712, a gear pair 713/81, and a gear pair 82/91. In this way, a first gear speed ratio up to 10 or more can be provided. When the brake B₁ is disengaged, and the brake B₂ is engaged, the tires 92 are driven by the prime mover 6 through the first sun gear 711, the first planetary carrier 712, the second planetary carrier 722, the gear pair 713/81, and the gear pair 82/91. In this way, a second gear speed ratio of about 5 can be provided.

In the related art, when the two brakes B₁ and B₂ are simultaneously supplied with the pressure oil due to the failure, the transmission may be self-locked. Sudden self-locking of the transmission on a highway or a wet slippery road may result in locking of the wheels and out-of-controlling of the vehicle in direction, even rollover of the vehicle. However, in the present disclosure, the anti-locking valve can automatically restrict the oil supply pressure during the failure, thereby effectively avoiding locking of the wheels, which in turn avoiding rollover accident.

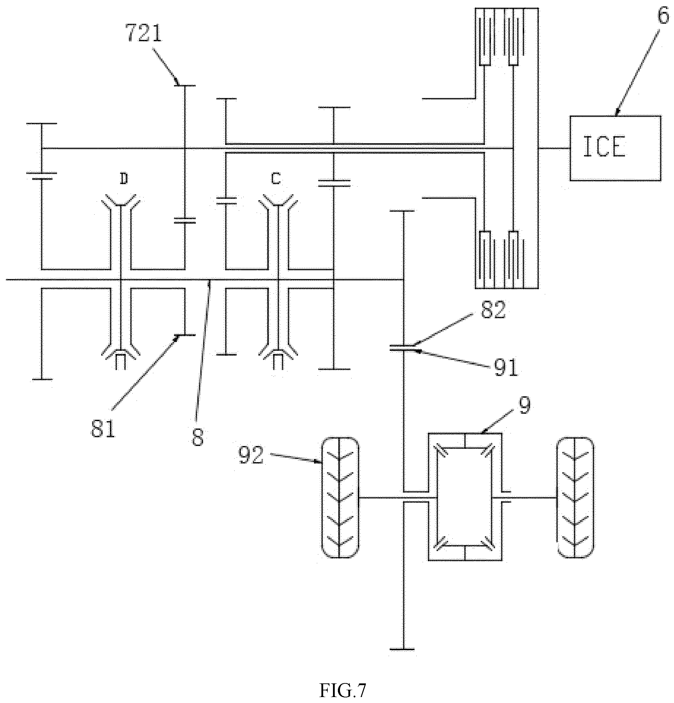

FIG. 7 is a schematic diagram of a dual-clutch multi-speed transmission according to another embodiment of the present disclosure. Referring to FIG. 7, the embodiments of the present disclosure may also be applied to the dual-clutch multi-speed transmission illustrated in FIG. 7. The anti-locking valve is connected to the oil supply circuits of a clutch B₁ and a clutch B₂ to avoiding simultaneous operations of the two clutches, thereby avoiding the wheel locking accident.

Compared with the existing anti-self-locking of the transmission in the related art, in the embodiments of the present disclosure, one electromagnetic valve, two pressure sensors, and corresponding electronic failure safety software are replaced with one anti-locking valve. In this way, cost and space of these parts can be saved, and reliability of the transmission is further enhanced because these removed parts are not absolutely reliable.

It should be noted that the embodiments of the present disclosure are not limited to avoiding the self-locking of the transmission, and can also be applied in any hydraulic system that needs to avoid simultaneous operations of two hydraulic brakes.

According to the hydraulic control valve, the hydraulic control system, and the transmission according to the embodiments of the present disclosure, the hydraulic pressures of the two oil supply circuits can be sensed simultaneously. When the total hydraulic pressure from the two oil supply circuits is greater than a predetermined value, the hydraulic control valve can bring one of the two oil supply circuits into communication with the oil discharge port 114 automatically to relieve the pressure of this oil supply circuit. As a result, it is possible to prevent the transmission from being self-locked.

The hydraulic control valve has a reliable design, fast response, simple structure, and small volume. In addition, there is no need for the hydraulic control valve to be additionally provided with a pressure sensor and series electromagnetic valve. Thus, the hydraulic control valve can be easily manufactured at low cost, thereby solving the problems of high cost and large space occupation in the transmission anti-self-locking technology in the related art.

It should be noted that the sequence of the embodiments of the present disclosure is merely for description, and does not represent the advantages and disadvantages of the embodiments. The specific embodiments of the present specification are described above. Other embodiments fall within the scope of the appended claims. Each embodiment in the specification is described in a progressive manner. The same or similar parts of various embodiments can be referred to each other. Each embodiment focuses on differences from other embodiments.

While the preferred embodiments of the present disclosure have been described above, they are not intended to limit the present disclosure. Any modifications, equivalent substitutions, and improvements should fall within the scope of the present disclosure insofar as they fall within the scope of the appended claims.

## Claims

1. A hydraulic control system, comprising:
a first oil cylinder (2);
a second oil cylinder (3);
a first proportional valve (4);
a second proportional valve (5); and
a hydraulic control valve, comprising a valve body (11), a slidable valve cartridge (12), and a pressing mechanism, wherein:
a valve hole (111), a first oil supply port (112), a second oil supply port (113), and an oil discharge port (114) are formed at the valve body (11), each of the first oil supply port (112), the second oil supply port (113), and the oil discharge port (114) being in communication with the valve hole (111);
both the slidable valve cartridge (12) and the pressing mechanism are accommodated within the valve hole (111);
the slidable valve cartridge (12) has a small end close to an end of the valve hole (111) and a large end abutting against the pressing mechanism;
the pressing mechanism is disposed at another end of the valve hole (111);
wherein the slidable valve cartridge (12) further comprises:
a first pressure sensing end (122) configured to sense an oil supply pressure from the first oil supply port (112), the first pressure sensing end (122) being an annular surface between the small end of the slidable valve cartridge (12) and the large end of the slidable valve cartridge (12); and
a second pressure sensing end (123) configured to sense an oil supply pressure from the second oil supply port (113), the second pressure sensing end (123) being a small end surface of the slidable valve cartridge (12);
the hydraulic control valve having a first operation state and a second operation state,
wherein:
in the first operation state, a total oil supply pressure, of the oil supply pressure from the first oil supply port (112) and the oil supply pressure from the second oil supply port (113), on the slidable valve cartridge is smaller than or equal to a pressing force from the pressing mechanism, and the first oil supply port (112), the second oil supply port (113), and the oil discharge port (114) are in no communication with each other; and
in the second operation state, the total oil supply pressure, of the oil supply pressure from the first oil supply port (112) and the oil supply pressure from the second oil supply port (113), on the slidable valve cartridge is greater than the pressing force from the pressing mechanism, and the slidable valve cartridge moves towards the pressing mechanism to bring the first oil supply port (112) into communication with the oil discharge port (114) via the valve hole (111),
**characterized in that** the hydraulic control system further comprises:
an outlet (41) of the first proportional valve which is in communication with each of the first oil cylinder (2) and the first oil supply port (112); and
an outlet of the second proportional valve (5) which is in communication with each of the second oil cylinder (3) and a second oil supply port (113).

2. The hydraulic control system according to claim 1, wherein:
the valve body (11) further comprises a valve port (115) formed at the valve hole (111) between the first oil supply port (112) and the oil discharge port (114); and
the slidable valve cartridge (12) further comprises a sealing portion (121) configured to close or open the valve port (115) through a movement of the slidable valve cartridge (12) to change a communication state between the first oil supply port (112) and the oil discharge port (114), a shape of the sealing portion (121) matching with a shape of the valve port (115).

3. The hydraulic control system according to claim 2, wherein the sealing portion (121) is of a frustum shape having a small end close to the small end of the slidable valve cartridge (12) and a large end close to the large end of the slidable valve cartridge (12).

4. The hydraulic control system according to claim 1, wherein a damping orifice (124) is further formed at the slidable valve cartridge (12), the damping orifice (124) being configured to guide the oil supply pressure from the first oil supply port (112) to the first pressure sensing end (122), and the damping orifice (124) being in communication with the valve hole (111).

5. The hydraulic control system according to claim 1, wherein the pressing mechanism comprises:
a spring (131), an end of the spring (131) abutting against the large end of the slidable valve cartridge (12); and
a spring seat (132) being disposed at the other end of the valve hole (111) and connected to another end of the spring (131).

6. The hydraulic control system according to claim 5, wherein the pressing mechanism further comprises a spring sleeve (133) coaxially arranged with the slidable valve cartridge (12) and sleeved over the slidable valve cartridge (12), the end of the spring (131) being connected to the spring sleeve (133), and the spring sleeve (133) being at least partially wrapped by the spring (131).

7. The hydraulic control system according to claim 1, wherein the hydraulic control valve further comprises a third oil supply port (116) in communication with the outlet (41) of the first proportional valve.

8. A transmission, **characterized in that** the transmission comprises the hydraulic control system according to any one of claims 1 to 7.

## Patentansprüche

1. Hydrauliksteuersystem, umfassend:
einen ersten Hydraulikzylinder (2);
einen zweiten Hydraulikzylinder (3);
ein erstes Proportionalventil (4);
ein zweites Proportionalventil (5); und
ein Hydrauliksteuerventil, das einen Ventilkörper (11), einen verschiebbaren Ventilschieber (12) und einen Vorspannmechanismus umfasst, wobei:
in dem Ventilkörper (11) eine Ventilbohrung (111), ein erster Ölzufuhranschluss (112), ein zweiter Ölzufuhranschluss (113) und ein Ölabflussanschluss (114) ausgebildet sind, wobei der erste Ölzufuhranschluss (112), der zweite Ölzufuhranschluss (113) und der Ölabflussanschluss (114) jeweils mit der Ventilbohrung (111) in Verbindung stehen;
sowohl der verschiebbare Ventilschieber (12) als auch der Vorspannmechanismus in der Ventilbohrung (111) aufgenommen sind;
der verschiebbare Ventilschieber (12) ein kleines Ende, das einem Ende der Ventilbohrung (111) benachbart ist, und ein großes Ende, das an dem Vorspannmechanismus anliegt, aufweist;
der Vorspannmechanismus an einem anderen Ende der Ventilbohrung (111) angeordnet ist;
wobei der verschiebbare Ventilschieber (12) ferner umfasst:
eine erste Druckaufnahmefläche (122), die dazu eingerichtet ist, einen Ölzufuhrdruck von dem ersten Ölzufuhranschluss (112) aufzunehmen, wobei die erste Druckaufnahmefläche (122) eine ringförmige Fläche zwischen dem kleinen Ende des verschiebbaren Ventilschiebers (12) und dem großen Ende des verschiebbaren Ventilschiebers (12) ist; und
eine zweite Druckaufnahmefläche (123), die dazu eingerichtet ist, einen Ölzufuhrdruck von dem zweiten Ölzufuhranschluss (112) aufzunehmen, wobei die zweite Druckaufnahmefläche (123) eine Stirnfläche des kleines Endes des verschiebbaren Ventilschiebers (12) ist;
wobei das Hydrauliksteuerventil einen ersten Betriebszustand und einen zweiten Betriebszustand aufweist, wobei:
in dem ersten Betriebszustand der auf den verschiebbaren Ventilschieber wirkende Gesamtölzufuhrdruck, der sich aus dem Ölzufuhrdruck von dem ersten Ölzufuhranschluss (112) und dem Ölzufuhrdruck von dem zweiten Ölzufuhranschluss (113) zusammensetzt, kleiner als oder gleich einer von dem Vorspannmechanismus ausgeübten Vorspannkraft ist und der erste Ölzufuhranschluss (112), der zweite Ölzufuhranschluss (113) und der Ölabflussanschluss (114) nicht miteinander in Verbindung stehen; und
in dem zweiten Betriebszustand der auf den verschiebbaren Ventilschieber wirkende Gesamtölzufuhrdruck, der sich aus dem Ölzufuhrdruck von dem ersten Ölzufuhranschluss (112) und dem Ölzufuhrdruck von dem zweiten Ölzufuhranschluss (113) zusammensetzt, größer als die von dem Vorspannmechanismus ausgeübte Vorspannkraft ist und sich der verschiebbare Ventilschieber auf den Vorspannmechanismus zu bewegt, um den ersten Ölzufuhranschluss (112) über die Ventilbohrung (111) mit dem Ölabflussanschluss (114) in Verbindung zu bringen,
**dadurch gekennzeichnet, dass** das Hydrauliksteuersystem ferner umfasst:
einen Auslass (41) des ersten Proportionalventils, der sowohl mit dem ersten Hydraulikzylinder (2) als auch mit dem ersten Ölzufuhranschluss (112) in Verbindung steht; und
einen Auslass des zweiten Proportionalventils (5), der sowohl mit dem zweiten Hydraulikzylinder (3) als auch mit dem zweiten Ölzufuhranschluss (113) in Verbindung steht.

2. Hydrauliksteuersystem nach Anspruch 1, wobei:
der Ventilkörper (11) ferner eine Ventilöffnung (115) umfasst, die an der Ventilbohrung (111) zwischen dem ersten Ölzufuhranschluss (112) und dem Ölabflussanschluss (114) ausgebildet ist; und
der verschiebbare Ventilschieber (12) ferner einen Dichtabschnitt (121) umfasst, der dazu eingerichtet ist, durch eine Bewegung des verschiebbaren Ventilschiebers (12) die Ventilöffnung (115) zu schließen oder zu öffnen, um einen Verbindungszustand zwischen dem ersten Ölzufuhranschluss (112) und dem Ölabflussanschluss (114) zu ändern, wobei eine Form des Dichtabschnitts (121) an eine Form der Ventilöffnung (115) angepasst ist.

3. Hydrauliksteuersystem nach Anspruch 2, wobei der Dichtabschnitt (121) kegelstumpfförmig ist und ein kleines Ende, das dem kleinen Ende des verschiebbaren Ventilschiebers (12) benachbart ist, sowie ein großes Ende, das dem großen Ende des verschiebbaren Ventilschiebers (12) benachbart ist, aufweist.

4. Hydrauliksteuersystem nach Anspruch 1, wobei in dem verschiebbaren Ventilschieber (12) ferner eine Dämpfungsbohrung (124) ausgebildet ist, die dazu eingerichtet ist, den Ölzufuhrdruck von dem ersten Ölzufuhranschluss (112) zu der ersten Druckaufnahmefläche (122) zu leiten, und wobei die Dämpfungsbohrung (124) mit der Ventilbohrung (111) in Verbindung steht.

5. Hydrauliksteuersystem nach Anspruch 1, wobei der Vorspannmechanismus umfasst:
eine Feder (131), wobei ein Ende der Feder (131) an dem großen Ende des verschiebbaren Ventilschiebers (12) anliegt; und
einen Federsitz (132), der an dem anderen Ende der Ventilbohrung (111) angeordnet und mit einem anderen Ende der Feder (131) verbunden ist.

6. Hydrauliksteuersystem nach Anspruch 5, wobei der Vorspannmechanismus ferner eine Federhülse (133) umfasst, die koaxial zu dem verschiebbaren Ventilschieber (12) angeordnet und auf den verschiebbaren Ventilschieber (12) aufgeschoben ist, wobei das Ende der Feder (131) mit der Federhülse (133) verbunden ist und die Federhülse (133) zumindest teilweise von der Feder (131) umgeben ist.

7. Hydrauliksteuersystem nach Anspruch 1, wobei das Hydrauliksteuerventil ferner einen dritten Ölzufuhranschluss (116) umfasst, der mit dem Auslass (41) des ersten Proportionalventils in Verbindung steht.

8. Getriebe, **dadurch gekennzeichnet, dass** das Getriebe das Hydrauliksteuersystem nach einem der Ansprüche 1 bis 7 umfasst.

## Revendications

1. Un système de commande hydraulique, comprenant :
un premier cylindre d'huile (2) ;
un second cylindre d'huile (3) ;
une première soupape proportionnelle (4) ;
une seconde soupape proportionnelle (5) ; et
une soupape de commande hydraulique, comprenant un corps de soupape (11), une cartouche de soupape coulissante (12) et un mécanisme de pression, dans laquelle :
un trou de soupape (111), un premier orifice d'alimentation en huile (112), un second orifice d'alimentation en huile (113) et un orifice de décharge d'huile (114) sont formés au niveau du corps de soupape (11), chacun du premier orifice d'alimentation en huile (112), du second orifice d'alimentation en huile (113) et de l'orifice de décharge d'huile (114) étant en communication avec le trou de soupape (111) ;
à la fois la cartouche de soupape coulissante (12) et le mécanisme de pression sont logés à l'intérieur du trou de soupape (111) ;
la cartouche de soupape coulissante (12) a une petite extrémité proche d'une extrémité du trou de soupape (111) et une grande extrémité en butée contre le mécanisme de pression ;
le mécanisme de pression est disposé à une autre extrémité du trou de soupape (111) ;
dans laquelle la cartouche de soupape coulissante (12) comprend en outre :
une première extrémité de détection de pression (122) configurée pour détecter une pression d'alimentation en huile provenant du premier orifice d'alimentation en huile (112), la première extrémité de détection de pression (122) étant une surface annulaire entre la petite extrémité de la cartouche de soupape coulissante (12) et la grande extrémité de la cartouche de soupape coulissante (12) ; et
une seconde extrémité de détection de pression (123) configurée pour détecter une pression d'alimentation en huile provenant du second orifice d'alimentation en huile (113), la seconde extrémité de détection de pression (123) étant une surface de petite extrémité de la cartouche de soupape coulissante (12) ;
la soupape de commande hydraulique ayant un premier état de fonctionnement et un second état de fonctionnement, dans laquelle :
dans le premier état de fonctionnement, une pression d'alimentation en huile totale, de la pression d'alimentation en huile provenant du premier orifice d'alimentation en huile (112) et de la pression d'alimentation en huile provenant du second orifice d'alimentation en huile (113), sur la cartouche de soupape coulissante est inférieure ou égale à une force de pression provenant du mécanisme de pression, et le premier orifice d'alimentation en huile (112), le second orifice d'alimentation en huile (113) et l'orifice de décharge d'huile (114) ne sont pas en communication les uns avec les autres ; et
dans le second état de fonctionnement, la pression d'alimentation en huile totale, de la pression d'alimentation en huile provenant du premier orifice d'alimentation en huile (112) et de la pression d'alimentation en huile provenant du second orifice d'alimentation en huile (113), sur la cartouche de soupape coulissante est supérieure à la force de pression provenant du mécanisme de pression, et la cartouche de soupape coulissante se déplace vers le mécanisme de pression pour amener le premier orifice d'alimentation en huile (112) en communication avec l'orifice de décharge d'huile (114) par l'intermédiaire du trou de soupape (111),
**caractérisé en ce que** le système de commande hydraulique comprend en outre :
une sortie (41) de la première soupape proportionnelle qui est en communication avec chacun du premier cylindre d'huile (2) et du premier orifice d'alimentation en huile (112) ; et
une sortie de la seconde soupape proportionnelle (5) qui est en communication avec chacun du second cylindre d'huile (3) et d'un second orifice d'alimentation en huile (113).

2. Système de commande hydraulique selon la revendication 1, dans lequel :
le corps de soupape (11) comprend en outre un orifice de soupape (115) formé au niveau du trou de soupape (111) entre le premier orifice d'alimentation en huile (112) et l'orifice de décharge d'huile (114) ; et
la cartouche de soupape coulissante (12) comprend en outre une partie d'étanchéité (121) configurée pour fermer ou ouvrir l'orifice de soupape (115) par un mouvement de la cartouche de soupape coulissante (12) pour changer un état de communication entre le premier orifice d'alimentation en huile (112) et l'orifice de décharge d'huile (114), une forme de la partie d'étanchéité (121) correspondant à une forme de l'orifice de soupape (115).

3. Système de commande hydraulique selon la revendication 2, dans lequel la partie d'étanchéité (121) est de forme tronconique ayant une petite extrémité proche de la petite extrémité de la cartouche de soupape coulissante (12) et une grande extrémité proche de la grande extrémité de la cartouche de soupape coulissante (12).

4. Système de commande hydraulique selon la revendication 1, dans lequel un orifice d'amortissement (124) est en outre formé au niveau de la cartouche de soupape coulissante (12), l'orifice d'amortissement (124) étant configuré pour guider la pression d'alimentation en huile du premier orifice d'alimentation en huile (112) vers la première extrémité de détection de pression (122), et l'orifice d'amortissement (124) étant en communication avec le trou de soupape (111).

5. Système de commande hydraulique selon la revendication 1, dans lequel le mécanisme de pression comprend :
un ressort (131), une extrémité du ressort (131) étant en butée contre la grande extrémité de la cartouche de soupape coulissante (12) ; et
un siège de ressort (132) étant disposé à l'autre extrémité du trou de soupape (111) et connecté à une autre extrémité du ressort (131).

6. Système de commande hydraulique selon la revendication 5, dans lequel le mécanisme de pression comprend en outre un manchon de ressort (133) agencé coaxialement avec la cartouche de soupape coulissante (12) et emmanché sur la cartouche de soupape coulissante (12), l'extrémité du ressort (131) étant connectée au manchon de ressort (133), et le manchon de ressort (133) étant au moins partiellement enveloppé par le ressort (131).

7. Système de commande hydraulique selon la revendication 1, dans lequel la soupape de commande hydraulique comprend en outre un troisième orifice d'alimentation en huile (116) en communication avec la sortie (41) de la première soupape proportionnelle.

8. Transmission, **caractérisée en ce que** la transmission comprend le système de commande hydraulique selon l'une quelconque des revendications 1 à 7.
